# EUROPÄISCHE PATENTSCHRIFT

(11) **EP 2 845 242 B1**
(45) Veröffentlichungstag und Bekanntmachung des Hinweises auf die Patenterteilung: **23.10.2019**
(21) Anmeldenummer: 13708814.2
(22) Anmeldetag: 11.03.2013
(51) Int. Cl.: H01M 2/02, H01M 2/10, H01M 2/34, H01M 10/0525

(54) **VERFAHREN ZUR HERSTELLUNG VON LI-IONEN BATTERIEMODULEN UND EIN ENTSPRECHENDES LI-IONEN BATTERIEMODUL**
METHOD FOR PRODUCING LI-ION BATTERY MODULES AND A CORRESPONDING LI-ION BATTERY MODULE
PROCÉDÉ DE FABRICATION DE MODULES DE BATTERIE LITHIUM-ION ET UN MODULE DE BATTERIE LITHIUM-ION CORRESPONDANT

(30) Priorität: 30.04.2012 DE 102012207162
(43) Veröffentlichungstag der Anmeldung: 11.03.2015
(73) Patentinhaber: Robert Bosch GmbH, 70442 Stuttgart (DE)
(72) Erfinder: DORSCH, Niko, 71229 Leonberg (DE)
(86) Internationale Anmeldenummer: PCT/EP2013/054892
(87) Internationale Veröffentlichungsnummer: WO 2013/164119

(56) Entgegenhaltungen:
- DE-A1-102008 031 175
- DE-A1-102009 040 147
- DE-A1-102010 002 000
- US-A1- 2006 286 441
- US-A1- 2010 209 759
- US-A1- 2011 177 377

## Beschreibung

Die Erfindung betrifft ein Verfahren zur Herstellung von Li-Ionen Batteriemodulen und ein entsprechendes Li-Ionen Batteriemodul.

### Stand der Technik

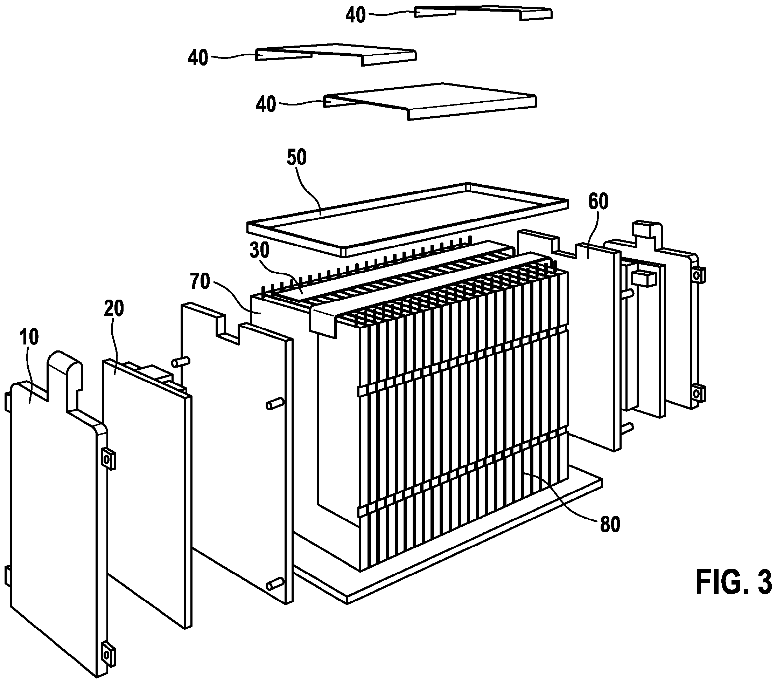

Fig. 3 ist eine schematische Darstellung des Aufbaus einer beispielhaften Anordnung mechanisch verspannter Zellen.

In Fig. 3 bezeichnet Bezugszeichen 10 eine Deckplatte einer Elektronik, 20 eine Steuerelektronik, 30 eine Laser-geschweißte Verbindungsschiene, 40 einen Verbindungsdeckel, 50 ein Druckband, 60 eine Druckplatte, 70 eine prismatische Lithium Ionen Zelle und Bezugszeichen 80 einen Kühlkörper.

Es ist bekannt, dass sich unter gewissen Umständen ein mechanischer Druck auf Li-Ionenzellen positiv auf deren Lebensdauer auswirkt.

Darüber hinaus wird die mechanische Verpressung zur mechanischen Fixierung häufig eingesetzt. Auch für die thermische Kontaktierung zur Kühlung der Zellen werden diese häufig verpresst. Besonders häufig findet man mechanisch verpresste Zellen bei besonders dünn und leicht gestalteten Zellbauformen, wie z.B. den Pouchzellen oder den etwas steiferen prismatischen Metal-Case-Zellen.

Stand der Technik ist entsprechend DE 10 2009 010 148 A1 beispielsweise ein Ableiter einer galvanischen Zelle oder ein Kontaktelement zu Ihrer Kontaktierung, die zumindest stellenweise eine Oberflächenstruktur aufweisen, die bei kraftschlüssiger Verbindung des Ableiters mit einem Kontaktelement den Druck erhöht, den Ableiter und Kontaktelement aufeinander ausüben.

Es ist weiterhin wie aus z.B DE 10 2010002 000 A1 bekannt, dass häufig elastische Elemente wie z.B. elastische Folien zum "weggesteuerten" Aufbringen der Belastungskraft genutzt werden.

Ein neues, robustes und preisgünstiges Konzept zum Aufbringen der Anpresskräfte ist daher wünschenswert. Hierbei soll insbesondere berücksichtigt werden, dass die Zellen über ihre Lebensdauer dicker und bauchiger werden. Außerdem soll ein Konzept Anwendung finden, welches robust gegen Schwankungen im Produktionsprozess ist, die zu Unterschieden in der Zelldicke führen können.

### Offenbarung der Erfindung

Die vorliegende Erfindung löst die oben genannte Aufgabe dadurch, dass sie ein Verfahren zur Herstellung von Li-Ionen Batteriemodulen schafft, wie im Anspruch 1 beansprucht.

Die vorliegende Erfindung schafft außerdem ein entsprechendes Li-Ionen Batteriemodul.

Bevorzugte Weiterbildungen sind Gegenstand der jeweiligen Unteransprüche.

### Vorteile der Erfindung

Gemäß einer bevorzugten Weiterbildung handelt es sich bei der elastisch plastischen Einrichtung um eine elastisch plastische Folie, welche nur über einen gewissen elastischen Rückfederanteil verfügt. Durch die Verwendung einer rein elastisch plastischen Folie und damit keiner viskoelastischen Folie, welche ein zeitabhängig plastisches Verhalten zeigt, ergeben sich die nachfolgenden Vorteile.

Der plastische Anteil der Folie kompensiert Dickenunterschiede in der Zelle, wie sie nach dem Herstellungsprozess auftreten können. Das Atmen der Zelle, das Schwellen und Schrumpfen der Zelldicke beim Laden und Entladen der Zelle, wird über den elastischen Anteil kompensiert und ist somit weitestgehend unabhängig von der Gesamtverpressung der Folie. Das Wachsen der Zelle mit Ihrer Alterung wird durch den plastischen Anteil kompensiert, so dass der Druck auf die Zelle nur geringfügig zunimmt. Unebenheiten in der Zelloberfläche, z.B. die bauchige Form, wird durch die Plastizität kompensiert und die Zelle wird gleichmäßig belastet.

Gemäß einer bevorzugten Weiterbildung wobei es sich bei der elastisch plastischen Folie um expandiertes Graphit handelt, ergibt sich der Vorteil, dass das expandierte Graphit über ausgezeichnete thermische Leitfähigkeit verfügt und sich so positiv auf die Temperierung der Zelle auswirkt.

Gemäß einer bevorzugten Weiterbildung wobei die Form der Zellen rund ist, ergibt sich der Vorteil einer guten thermischen Anbindung.

Gemäß einer bevorzugten Weiterbildung wobei eine rein plastische Folie verwendet wird und die elastischen Eigenschaften durch mindestens ein elastisches Element bereitgestellt werden, ergibt sich der Vorteil, dass eine Vielzahl von Materialien für das erfindungsgemäße Verfahren anwendbar ist.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:

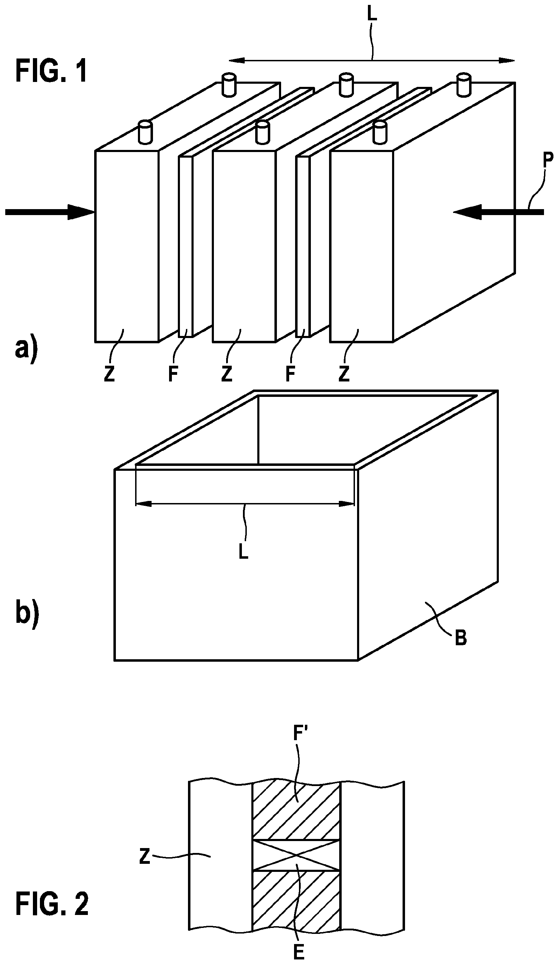

- Fig. 1 a): eine schematische Darstellung eines Li-Ionen Batteriemoduls hergestellt gemäß einer Ausführungsform des erfindungsgemäßen Verfahrens;
- Fig. 1 b): eine schematische Darstellung des Gehäuses eines Li-Ionen Batteriemoduls nach Fig. 1 a);
- Fig. 2: eine schematische Darstellung eines Li-Ionen Batteriemoduls hergestellt gemäß einer weiteren Ausführungsform des erfindungsgemäßen Verfahrens und
- Fig. 3: eine schematische Darstellung des Aufbaus einer beispielhaften Anordnung mechanisch verspannter Zellen.

In den Figuren bezeichnen gleiche Bezugszeichen gleiche bzw. funktionsgleiche Elemente.

Fig. 3 ist eine schematische Darstellung des Aufbaus einer beispielhaften Anordnung mechanisch verspannter Zellen.

In Fig. 3 bezeichnet Bezugszeichen 10 eine Deckplatte einer Elektronik, 20 eine Steuerelektronik, 30 eine Laser-geschweißte Verbindungsschiene, 40 einen Verbindungsdeckel, 50 ein Druckband, 60 eine Druckplatte, 70 eine prismatische Lithium Ionen Zelle und Bezugszeichen 80 einen Kühlkörper.

Fig. 1 a) ist eine schematische Darstellung eines Li-Ionen Batteriemoduls hergestellt gemäß einer Ausführungsform des erfindungsgemäßen Verfahrens und Fig. 1 b) ist eine schematische Darstellung des Gehäuses eines Li-Ionen Batteriemoduls hergestellt gemäß einer Ausführungsform des erfindungsgemäßen Verfahrens.

In Fig. 1 a) b) bezeichnet Bezugszeichen Z eine Zelle des Batteriemoduls. Bezugszeichen F bezeichnet eine elastisch plastische Folie und L ist die Längenausdehnung der gesamten Anordnung aus Zellen und Folien. B bezeichnet das Batteriemodul. P bezeichnet die Richtung in der der weggesteuerte Pressvorgang erfolgt.

Entsprechend einer ersten Ausführungsform des erfindungsgemäßen Verfahrens wird zwischen die in der Regel prismatischen Zellen Z eines Batteriemoduls eine elastisch plastische Folie F, beispielsweise aus expandiertem Graphit, gelegt.

Beim Zusammenpressen des Stapels entsteht ein zunehmender Druck auf die elastisch plastische Folie F, welche bei Überschreiten eines durch die Materialeigenschaften der Folie F eingestellten Drucks plastische nachgibt. Der Stapel aus Zellen Z und elastisch plastischer Folie F wird weggesteuert verpresst.
Unter "weggesteuert" wird verstanden, dass der Pressvorgang entlang eines vorgegeben Weges P bis zu einem definierten Endpunkt erfolgt.

In einer weiteren vorteilhaften Ausführungsform des erfindungsgemäßen Verfahrens können andere elastisch plastische Folien F verwendet werden, die nicht aus expandiertem Graphit bestehen.

Fig. 2 ist eine schematische Darstellung eines Li-Ionen Batteriemoduls hergestellt gemäß einer weiteren Ausführungsform des erfindungsgemäßen Verfahrens.

In Fig. 2 bezeichnet Bezugszeichen Z eine Zelle des Batteriemoduls. Bezugszeichen F' bezeichnet eine plastische Folie und Bezugszeichen E bezeichnet ein elastisches Element, beispielsweise eine Feder.

Insbesondere kann das erfindungsgemäße Verfahren auch auf runde Zellen Z mit guter thermischer Anbindung angewandt werden.

## Patentansprüche

1. Verfahren zur Herstellung von Li-Ionen Batteriemodulen (B), das folgende Schritte aufweist:
Anordnen einer elastisch plastischen Einrichtung (F; F'; E) zwischen mindestens zwei Zellen (Z) eines Batteriemoduls (B); wobei die Form der Zellen (Z) prismatisch ist
weggesteuertes Verpressen der mindestens zwei Zellen (Z) des Batteriemoduls (B) und der zwischen den mindestens zwei Zellen (Z) angeordneten elastischen plastischen Einrichtung (F; F'; E), wobei
die weggesteuerte Verpressung entlang eines vorgegeben Weges (P) bis zu einem definierten Endpunkt erfolgt, und eine Längsrichtung (L) das Batteriemoduls (B) und der vorgegeben Weg (P) parallel zu einander angeordnet ist.

2. Verfahren nach Anspruch 2, wobei eine Vielzahl von Zellen (Z) mit jeweils einer elastisch plastischen Einrichtung (F; F'; E) zwischen zwei benachbarten Zellen (Z) weggesteuert verpresst wird.

3. Verfahren nach Anspruch 1 oder 2, wobei es sich bei der elastisch plastischen Einrichtung um eine elastisch plastische Folie (F) handelt.

4. Verfahren nach Anspruch 3, wobei es sich bei der elastisch plastischen Folie (F) um expandiertes Graphit handelt.

5. Verfahren nach Anspruch 1 oder 2, wobei als elastisch plastische Einrichtung eine rein plastische Folie (F') in Kombination mit mindestens einem elastischen Element (E) verwendet wird.

6. Li-Ionen Batteriemodul (B), das folgende Komponenten aufweist:
mindestens zwei verpresste Zellen (Z), wobei die Form der Zellen (Z) prismatisch ist, und eine zwischen den mindestens zwei Zellen (Z) angeordnete elastisch plastische Einrichtung (F; F'; E), wobei
die Zellen (Z) in der Art weggesteuert verpresst ausgebildet sind, dass ein plastischer Anteil der elastisch plastischen Einrichtung Dickenunterschiede der Zellen aufgrund einer Alterung kompensiert und
ein elastischer Anteil der elastisch plastischen Einrichtung ein Schwellen oder Schrumpfen der Zelldicke aufgrund eines Ladens oder eines Entladens kompensiert.

7. Li-Ionen Batteriemodul (B) nach Anspruch 6, wobei es sich bei der elastisch plastischen Einrichtung um eine elastisch plastische Folie (F) handelt.

8. Li-Ionen Batteriemodul (B) nach Anspruch 7, wobei es sich bei der elastisch plastischen Folie (F) um expandiertes Graphit handelt.

9. Li-Ionen Batteriemodul (B) nach Anspruch 6, wobei als elastisch plastische Einrichtung eine rein plastische Folie (F') in Kombination mit mindestens einem elastischen Element (E) verwendet wird.

## Claims

1. Method for producing Li-ion battery modules (B), which method comprises the following steps:
arranging an elastically plastic device (F; F'; E) between at least two cells (Z) of a battery module (B); wherein the shape of the cells (Z) is prismatic,
compressing the at least two cells (Z) of the battery module (B) and the elastic plastic device (F; F'; E), which is arranged between the at least two cells (Z), in a displacement-controlled manner, wherein
the displacement-controlled compression takes place along a prespecified path (P) up to a defined end point, and a longitudinal direction (L) of the battery module (B) and the prespecified path (P) are arranged parallel in relation to one another.

2. Method according to Claim 2, wherein a large number of cells (Z), in each case with an elastically plastic device (F; F'; E) between two adjacent cells (Z), are compressed in a displacement-controlled manner.

3. Method according to Claim 1 or 2, wherein the elastically plastic device is an elastically plastic film (F).

4. Method according to Claim 3, wherein the elastically plastic film (F) is expanded graphite.

5. Method according to Claim 1 or 2, wherein the elastically plastic device used is a purely plastic film (F') in combination with at least one elastic element (E) .

6. Li-ion battery module (B) which comprises the following components:
at least two compressed cells (Z), wherein the shape of the cells (Z) is prismatic, and an elastically plastic device (F; F'; E) which is arranged between the at least two cells (Z), wherein
the cells (Z) are designed so as to be compressed in a displacement-controlled manner in such a way that a plastic component of the elastically plastic device compensates for differences in thickness of the cells due to ageing and
an elastic component of the elastically plastic device compensates for swelling or shrinkage of the cell thickness due to charging or discharging.

7. Li-ion battery module (B) according to Claim 6, wherein the elastically plastic device is an elastically plastic film (F).

8. Li-ion battery (B) according to Claim 7, wherein the elastically plastic film (F) is expanded graphite.

9. Li-ion battery module (B) according to Claim 6, wherein the elastically plastic device used is a purely plastic film (F') in combination with at least one elastic element (E).

## Revendications

1. Procédé de fabrication de modules de batterie (B) aux ions de lithium, lequel comprend les étapes suivantes :
disposition d'un dispositif élastiquement plastique (F ; F' ; E) entre au moins deux cellules (Z) d'un module de batterie (B) ; la forme des cellules (Z) étant prismatique
compression avec commande en fonction de la course des au moins deux cellules (Z) du module de batterie (B) et du dispositif plastique élastique (F ; F' ; E) disposé entre les au moins deux cellules (Z),
la compression avec commande en fonction de la course étant effectuée le long d'une course prédéfinie (P) jusqu'à un point final défini et une direction longitudinale (L) du module de batterie (B) et la course prédéfinie (P) étant disposées parallèlement l'une à l'autre.

2. Procédé selon la revendication 2, une pluralité de cellules (Z) étant compressées avec commande en fonction de la course respectivement avec un dispositif élastiquement plastique (F ; F' ; E) entre deux cellules (Z) voisines.

3. Procédé selon la revendication 1 ou 2, le dispositif élastiquement plastique étant un film élastiquement plastique (F).

4. Procédé selon la revendication 3, le film élastiquement plastique (F) étant du graphite expansé.

5. Procédé selon la revendication 1 ou 2, le dispositif élastiquement plastique utilisé étant un film purement plastique (F') en combinaison avec au moins un élément élastique (E).

6. Module de batterie (B) aux ions de lithium, comprenant les composants suivants :
au moins deux cellules (Z) compressées, la forme des cellules (Z) étant prismatique, et un dispositif élastiquement plastique (F ; F' ; E) disposé entre les au moins deux cellules (Z),
les cellules (Z) étant configurées compressées avec commande en fonction de la course de telle sorte qu'une part plastique du dispositif élastiquement plastique compense des différences d'épaisseur des cellules en raison d'un vieillissement et
une part élastique du dispositif élastiquement plastique compense un gonflement ou une rétraction de l'épaisseur de cellule en raison d'une charge ou d'une décharge.

7. Module de batterie (B) aux ions de lithium selon la revendication 6, le dispositif élastiquement plastique étant un film élastiquement plastique (F).

8. Module de batterie (B) aux ions de lithium selon la revendication 7, le film plastique élastique (F) étant du graphite expansé.

9. Module de batterie (B) aux ions de lithium selon la revendication 6, le dispositif élastiquement plastique utilisé étant un film purement plastique (F') en combinaison avec au moins un élément élastique (E).
